# EUROPEAN PATENT APPLICATION

(11) **EP 4 645 800 A1**
(43) Date of publication of application: **05.11.2025**
(21) Application number: 25173135.2
(22) Date of filing: 29.04.2025
(51) Int. Cl.: H04L 41/0859, H04L 41/0866, H04L 41/0869, H04W 24/04, H04L 41/0816, H04L 41/082, H04L 41/0895

(54) **METHOD FOR SAFEGUARDING REACHABILITY OF A REMOTE NETWORK NODE WITH PROGRAMMABLE AUTO ROLLBACK**

(30) Priority: 29.04.2024 IN 202441034047; 25.04.2025 US 202519190107
(71) Applicant: Mavenir Systems, Inc., Richardson, TX 75081 (US)
(72) Inventor: RAMANATHAN, Uma, 560100 Bangalore (IN); CHETAN KUMAR, S., 560097 Bangalore (IN); PETER, Anish, 560043 Bengaluru (IN)
(74) Representative: Dompatent Partnerschaft von Patent- und Rechtsanwälten mbB

(57) **Abstract**

A system and method for providing a set of operational checks to be implemented prior to configuration changes being made in a mobile network that includes a user computer connected to a management configuration system and connected to a data center having a storage and to a computer located at a remote cell site. The management configuration system provides for saving of an existing system configuration, and the automatic execution of a script that comprises a set of user-specified and programmed operational checks to ensure a new system configuration is valid prior to implementation of the new configuration on the system, where if the new configuration fails the operational checks, the system automatically rolls back to the previous configuration.

## Description

### BACKGROUND

### 1. Field of the Invention

The present disclosure is related to implementing configurations during run time in mobile networks. More particularly, the present disclosure is related to providing programmable operational check for automatically protecting against erroneous new configurations remotely implemented in mobile networks.

### 2. Description of Related Art

4G and 5G networks have two major components, the Radio Access Network (RAN), and the core network. The RAN typically comprises three major components, which include the Remote Radio Unit (RRU), the Distributed Unit (DU) and the Central Unit (CU). The mid-haul network connects the DU server to the CU server and the back-haul network connects the CU server to the core network. The DU server and the RRU are typically co-located at a cell site of a mobile network. The CU server and the core network are typically co-located in the data center. A different architecture has the CU server located at an aggregation point and the aggregation point connects to the core network at the data center.

An additional piece of equipment that is used at remote cell sites is a Cell Site Router (CSR). The CSR is typically coupled to the DU server and allows the DU server to establish a connection with a central location via a network connection. The CSR routes the traffic from the DU server towards the CU server over the mid-haul network.

However, each piece of equipment placed at a remote cell site increases the set up and operational cost of each remote cell site. As such, newer systems have been provided with Network Function Virtualization (NFV), which provides for network functions such as routing, firewall or load-balancing that can be accomplished with virtual devices known as Virtual Network Function (VNF). As one example, virtual Cell Site Routers (vCSR) comprise a software router that provides virtualized network functions. The vCSR replaces a physical router in a cellular network, that brings advantages like scalability and reduced total cost of ownership. In most common deployments the vCSR runs as a CNF/VNF (Cloud-Native Network Function/Virtual Network Function) functions on the physical server at the cell site. The server also hosts RAN DU CNF software. The DU software connects to the CU server, which is remotely located with the help of the vCSR. Like a physical CSR, a vCSR routes the packets from the DU server to the CU server over the mid-haul network. The mid-haul link now directly terminates on the physical server. The vCSR, supports features like Internet Protocol Security (IPSEC) and Virtual Private Network (VPN) to provide a secure and isolation of traffic carried towards the CU server.

A network device must support update of its configuration at runtime for the network to adapt to changing dynamics and operational requirements. The biggest challenge is weighing the benefits of dynamic configuration on busy networks relative to the risks attached to the disruption of existing services if the configuration does not work. Even a seemingly harmless configuration could lead to a major disruption, which may include loss of management plane connectivity leaving the network operation with no simple way to rectify the toxic configuration on a device.

Security attacks on networks are one of the major causes for dynamic configuration changes. When faced with such a situation, operation would be compelled to apply configuration changes on numerous devices on a network. Such situations would further mitigate the risk profile of network operations.

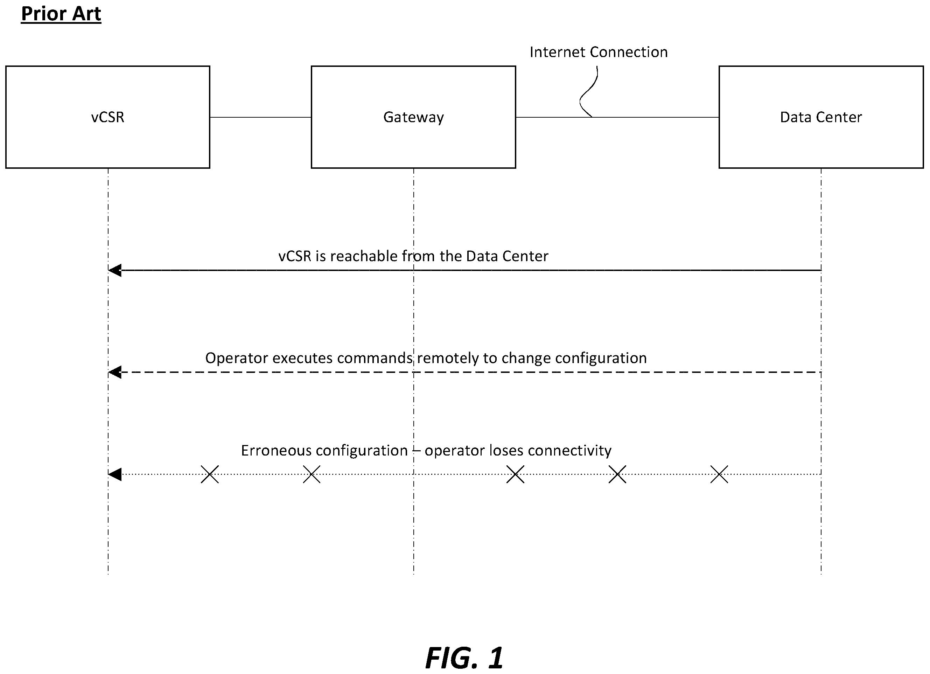

As stated above, certain remote configurations present a challenge for systems using a vCSR. For example, access control policy configuration to deny packets to gateway, can cause the cell site router or any other network node to lose connectivity to next hop router, to the CU or the Internet. Occasionally, the configuration may cause the maintenance team to lose connectivity to the CSR or any other network node itself. When a vCSR is deployed inside the DU server, there is no external device to establish the reachability network to the central location. This problem is illustrated in FIG. 1.

One way to address this issue is to perform a roll back. Once a set of configurations is applied and operator observes abnormal behavior or operational issues, the operator can roll back to a previous working configuration. However, the roll back itself cannot be achieved if the specific configuration causes loss of reachability to the network element itself. As such, any configuration that is applied must be operationally viable. An operationally unviable configuration is referred to as a toxic configuration.

In previously known systems, when the configuration entered caused the CSR or any other network node to lose connectivity, an operator would have to travel to the cell site to reset the configuration back to a normal state. This involved a physical visit of the operator to distant cell sites, which led to heavy expenditures for the service provider as well as significant down time for the network.

Traditionally, configuring a CSR involves remote settings. The criticality of maintaining constant accessibility to the router during this configuration process cannot be overstated. The potential consequences of an error in configuration are severe, with the risk of blocking access to the router itself and, consequently, disrupting the entire cell site.

Accordingly, there is a need for system and method that overcomes, alleviates, and/or mitigates one or more of the aforementioned and other deleterious effects of prior art CSR and vCSR systems used in mobile networks.

### SUMMARY

What is desired therefore is a system and method for mitigating an improper or incorrect CSR configuration used in a mobile network.

It is further desired to provide a system and method that allows for a set of operational checks to be implemented in manner that disruption of the mobile network is virtually impossible or eliminated.

It is still further desired to provide a system and method that allows an operator to specify the conditions under which a rollback decision is made by way of a user programmable interface.

It is also desired to provide a system and method that performs automatic roll back of a set of configurations, when certain conditions are disrupted by the set of configurations.

It is conceived that performing an operational health check of the network is desirable when accepting a new configuration. This eco-system should check for operational viability of the configuration in addition to the existing semantic check. The specifics of these operational checks would vary from network to network and device to device.

This invention introduces a device specific operational check eco-system in NOS (Network Operating System) prior to taking a provided configuration to production. In other words, a configuration fully is analyzed and tested prior to implementation.

Virtual Cell Site Routers (vCSR) have been used to replace hardware routers in the mid haul of mobile networks. The system and method allows the operator to configure the router remotely with an assurance that if the connectivity to the router is negatively impacted by a new access control policy configuration, the system can automatically revert to a previous configuration. It is understood by those of skill in the art that an access control policy configuration to deny packets to a gateway could cause the CSR or any other network node to lose connectivity to a next hop router, to the CU or the Internet. In particular, the operational checks to be run by the system are fully configurable by the operator.

Accordingly, a method is provided that allows a user to enter a fail-safe mode and attach an operation check. The system will automatically save a current configuration and then migrate that saved configuration to a fail-safe database. Once the configuration is saved, the system will then enter fail-safe mode. At this point, the operator can enter several commands including, for example, access control policy configurations selected or outlined by the operator. The entered commands are then checked by the system for syntax and semantics. The operator may then enter the "commit" command, which will cause the system to accept the fail-safe database changes to the running database. The system will then automatically run an "operations check" on the system now that the changes have been implemented to the running database. Based on the results of the operations check, the system will either exit the fail-safe mode if the check was successful or will revert the configuration back to the original configuration of the check resulted in a failure.

In some embodiments either alone or together with any one or more of the aforementioned and/or after-mentioned embodiments, a method for providing fail-safe operation for implementing configurations in a mobile network including a user computer connected to a management configuration system and connected to a data center with a Central Unit (CU) having a storage, which in turn is connected Distributed Unit (DU) computer via a Cell Site Router (CSR), both located at a remote cell site is provided, the method comprising the steps of: the user computer setting operations checks that are transmitted to the management configuration system, and the user computer indicating to the management configuration system that fail-safe mode is initiated. The method further comprises the steps of: the management configuration system automatically saving a mobile system configuration on the data center storage, the user computer generating commands to modify the configuration of the CSR, and the management configuration system of CSR automatically performing syntax and semantics checks of the generated commands. The method is provided such that, if the generated commands pass the check for syntax and semantics, the generated commands are installed on the CSR as a new configuration. The method further comprises the step of the management configuration system automatically performing an operations check of the new configuration to determine if the CSR is properly configured. The method is provided such that, if the operations check determines the CSR is properly configured, the management configuration system ends the fail-safe mode operation, and if the operations check determines the CSR is not properly configured, the management configuration system reverts the configuration of the CSR to the saved configuration.

The above-described and other features and advantages of the present disclosure will be appreciated and understood by those skilled in the art from the following detailed description, drawings, and appended claims.

### DESCRIPTION OF THE DRAWINGS

FIG. 1 illustrates when a connection to a CSR goes down due to an erroneous configuration according to the prior art.
FIG. 2 is a block diagram of a mobile network comprising a Radio Access Network (RAN).
FIG. 3 is a flow diagram of a method for ensuring fail-safe connection of a CSR according to the system of FIG. 2.
FIG. 4 is a flow diagram for operation checks for a RAN illustrating a transaction with a functional configuration and a transaction with a non-functional configuration according to the method of FIG. 3.

### DETAILED DESCRIPTION

Various additional details of configurations will be described below with reference to the figures. While the flowcharts will be discussed and illustrated in relation to a sequence of events, it should be appreciated that changes, additions, and omissions to this sequence can occur without materially affecting the operation of the disclosed embodiments, configuration, and aspects.

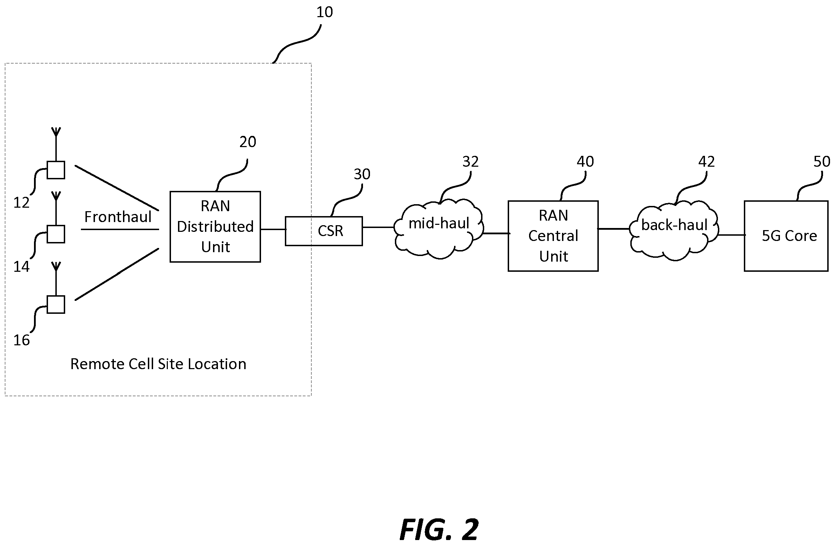

Referring to the drawings and in particular to FIG. 2, a remote cell site location 10 is illustrated by a dashed line. At the remote cell site location 10 a DU server 20 is provided along with a CSR 30. The CSR 30 allows the DU server 20 to communicate with CU server 40 via mid-haul connection 32. Mid-haul connection 32 can be a public Wide Area Network (WAN) or a leased line connection over the WAN. The CU server 40 communicates with 5G Core equipment 50 via back-haul connection 42.

The DU server at remote cell site 10 communicates with Remote Radio Units (RRUs) 12, 14, 16 with a fiber or copper cable. It should be noted that while three RRUs are illustrated, additional RRUs may be connected to DU server.

Referring back to FIG. 1, consider an example of when an operator from a data center wishes to enable an access control policy on a vCSR via the Command Line Interface (CLI) or another management tool., If the operator unintentionally or inadvertently configures an access control policy that disables the remote CLI access or the management tool access, the operator loses complete access to the vCSR from that point forward.

The problem as depicted FIG. 1 could be solved by providing an auto-roll back to the previous state, if the configuration potentially causes reachability loss to CSR or any other network node. A fail-safe configuration mode is introduced for the operator. In the fail-safe mode, any command that can potentially make the CSR or any other network node lose connectivity will not be accepted and executed.

While the operator is in failsafe mode, he must provide operational check programs. When the operator enters failsafe mode and enters a set of commands they wish to execute, these commands are captured by CSR or any other network node as part of fail-safe mode. These commands do not take effect until operator types, commit. However, the commands are checked for syntax and semantics. When the user enters commit, the commands are executed in batch / bulk mode and at the same time, after executing the command the router performs operational checks using an operational check program provided by the operator previously. Only if the operation check program succeeds does the router exit the fail-safe mode. If the operational check program fails, the router rolls back the batch commands and the router migrates back to the configuration prior to entering the fail-safe mode.

The Operational check program can be a script / executable or a set of scripts that can verify a plurality of conditions, such as, not limited to:
A) reachability to the router from data center;
B) reachability to remote radio units;
C) process health;
   a. The operation check program could check if a certain set of processes that are outlined are up and running after a config change.
   b. The operation check program could check if there is a core-dump / crash in the system prior / post config change.
D) CPU utilization / memory health;
E) Time synchronization;
   a. The operation check program could verify if the time synchronization fails or is out-of-sync after config change.
F) Control plane synchronization (check for control plane adjacencies and/or specific forwarding table entries);
G) Control plane states;
   a. The operation check program could check for dynamic control plane protocol (Open Shortest Path First (OSPF), Border Gateway Protocol (BGP), Intermediate System-to-Intermediate System (IS-IS), etc.) states.
H) Interface states (physical / logical interface operational information);
I) Counters and statistics (various counters related to interface, forwarding information, ACL, etc.); and
J) Management plane connectivity;
K) Traffic engineering validation;
   a. The operation check program could measure latency / jitter / queue-length / throughput for certain class of traffic after config change.

It should be noted that, while various functions and methods will be described and presented in a sequence of steps, the sequence has been provided merely as an illustration of one advantageous configuration, and that it is not necessary to perform these functions in the specific order illustrated. It is further contemplated that any of these steps may be moved and/or combined relative to any of the other steps. In addition, it is still further contemplated that it may be advantageous, depending upon the application, to utilize all or any portion of the functions described herein.

In one configuration, a method may include the following steps:

1) When commands are remotely executed, the user enters failsafe mode through a command such as,
*config failsafe enter <sciptpath> <script_timeout_seconds>*

2) Thereafter, the operator enters commands.

3) The commands that have been entered are checked for syntax and semantics but are not accepted into the system at this point.

4) After the commands have been entered, e.g., Access Control List (ACL), Policy-Based Routing (PBR), IP address configuration or generic router configurations, a network ACL that comprises rules, either allows access to a computer environment or denies it. PBR is a technique that forwards and routes data packets based on policies or filters. The operator executes the below command to make system accept the commands:

### config failsafe commit

5) Prior to commit, the scriptpath provided is executed.
a) If the script passes, the commit is successfully completed.
b) If script fails, the fail-safe module automatically performs a rollback of the configuration.

It should be noted that at any point in time during the operation, the operator can execute 'abort' to quit the failsafe mode.

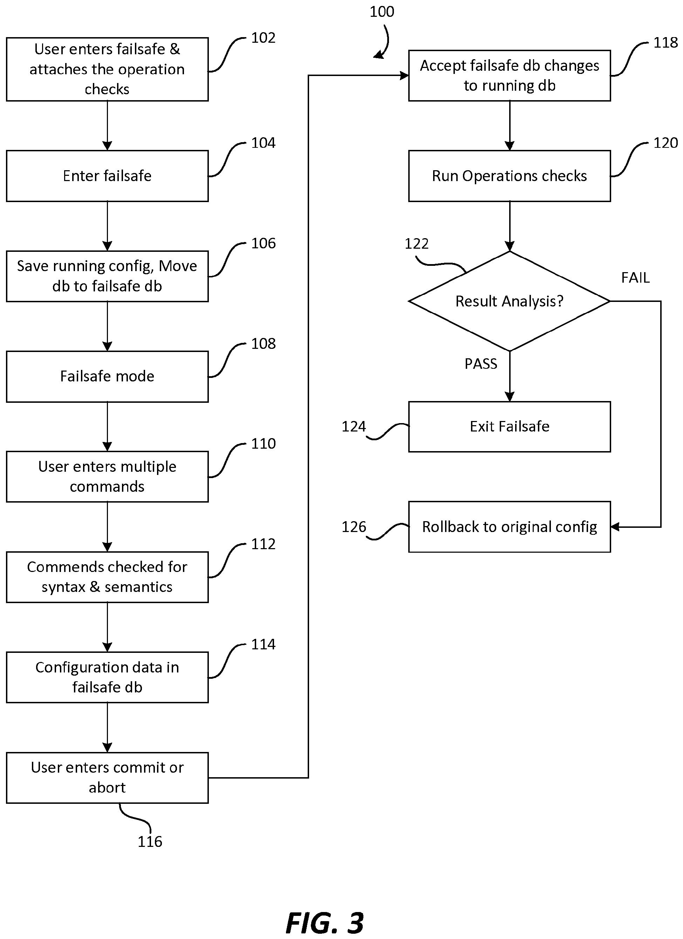

FIG. 3 is a flow chart that summarizes a method for ensuring fail-safe connection of a CSR 100. The method includes the following steps:

Step 1 - User enters fail-safe mode and attaches the operation checks 102.

Step 2 - The system enters fail-safe mode 104.

Step 3 - The system saves the configuration and then moves the saved configuration to the fail-safe database 106.

Step 4 - The system then enters fail-safe mode 108.

Step 5 - The user may then enter several commands 110.

Step 6 - The entered commands are then checked for syntax and semantics by the system 112.

Step 7 - At this point, the configuration data is in the fail-safe database 114.

Step 8 - The user may then enter the "commit" command 116.

Step 9 - The system will then accept the fail-safe database changes to the running database 118.

Step 10 - The system will then run an operations check 120 on the system now that the changes have been implemented to the running database.

Step 11 - The system determines the result of the operations check 122.

Step 12(a) - If the system determines that the system is functioning properly, the system will then exit fail-safe mode 124.

Step 12(b) - If the system determines that the system is not functioning properly, the system will roll back the configuration to the original configuration 126.

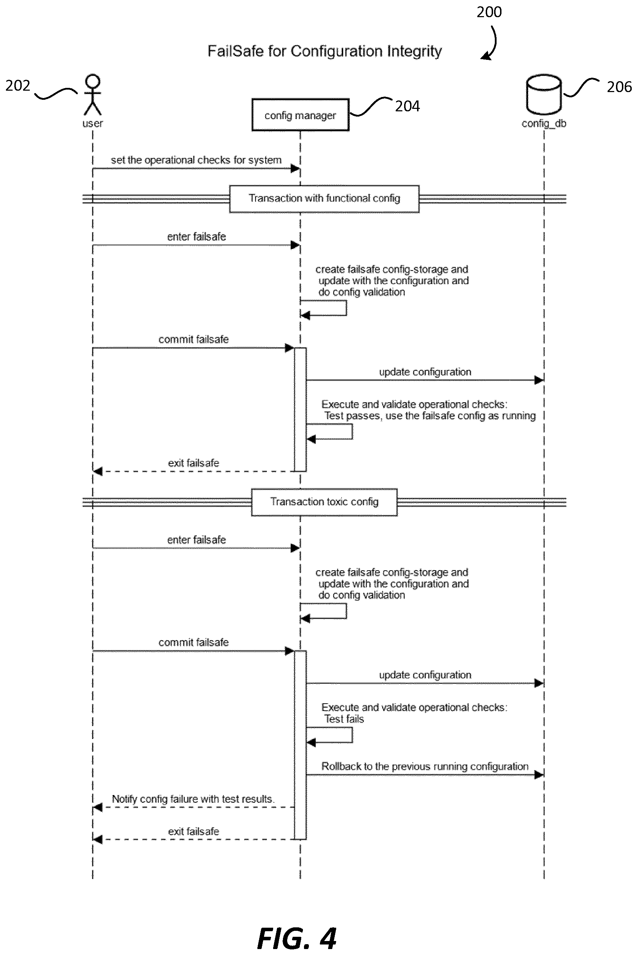

FIG. 4 is a functional flow diagram illustrating the flow of information and data in the system, from a user computer 202 to a configuration manager module 204 to the configuration database 206.

### Example 1 - Access Control List (ACL).

a. Initially, the operator writes a script and enters the fail-safe mode using the path of the program or script. The script pings the data center, which returns success if it can, or failure if it cannot. It should be noted that this script is custom and written by the customer.
b. As of now, the vCSR can ping the data center. As an example, the IP of the data center is 10.10.10.5. So, a ping to 10.10.10.5 manually will return a success.
c. Now, the operator may wish to add Access Control List (ACL) configurations to avoid certain traffic. The user will then enter fail-safe mode.
d. The operator adds ACL configurations to deny 10.0.0.0/8. It will be noted that this is a potential disaster because if this configuration goes through, the vCSR will not be accessible. The syntax and semantics check passes, and the command is accepted as part of fail-safe mode.
e. Those of skill in the art will understand that the user may add additional commands along with the above ACL configurations command.
f. The operator now confirms the commands using "commit."
g. Post commit, the router runs the operator's custom script to ping the data center. Since the subnet to the data center is now denied, the ping fails, and the script returns a failure.
h. This results in an automatic rollback of the configuration to the original configuration before the change. This ensures that any incorrect configuration is seamlessly and automatically reverted.
i. The control then goes back to the operator with the failsafe commit fail result.
j. The operator can now analyze why the configurations failed and correct the configurations in the next iteration.

The system and method described herein provides flexibility for operators to tailor decision criteria according to their preferences. Operators can create personalized scripts, empowering them to dictate the decision-making process. This adaptability allows for a dynamic and operator-centric approach to configuration while providing automatic fail-safe protection to automatically rollback problematic configurations.

### Example 2 - QoS queue length.

a. Initially, the operator writes a script and enters the failsafe mode using the path of the program or script. The script checks if the queue length is greater than a threshold. Success is returned if the queue length is within 200, and failure is returned if it is greater. It should be noted that this script is a custom and written by the operator.
b. The operator wishes to change the priority of one the flows and enters the failsafe mode.
c. The operator reconfigures the priority of an existing class.
d. The operator confirms the commands using commit.
e. Post commit, the router runs the operator's custom script to check for the queue length. In this case, if the queue length is beyond 200, the script returns a failure.
f. This results in a rollback of the configuration.
g. The control goes back to the operator with the failsafe commit fail result.
h. The operator can now analyze why the configurations failed and correct the configurations in the next iteration.

### Example 3 - Process health.

a. Initially, the operator writes a script and enters the failsafe mode using the path of the program or script. The script is fed with a list of processes. The health of each of these processes is checked in terms of current running state / prior core dumps / CPU usage and memory usage. Success is returned if the process parameters are found healthy, or failure is returned otherwise. Note that this script is custom and written by the operator.
b. Now the operator wishes to apply a set of configuration changes and enters the failsafe mode.
c. The operator applies a set of configuration changes.
d. Now, the operator confirms the commands using commit.
e. Post commit, the router runs the operator's custom script to check for process health. In this case, if the process health check fails, the fail-safe check returns a failure.
f. A failed returned fail-safe check results in a rollback of the configuration.
g. The control goes back to the operator with the failsafe commit fail result.
h. The operator can now analyze why the configurations failed and correct the configurations in the next iteration.

While the present disclosure has been described with reference to one or more exemplary embodiments, it will be understood by those skilled in the art that various changes may be made and equivalents may be substituted for elements thereof without departing from the scope of the present disclosure. In addition, many modifications may be made to adapt a particular situation or material to the teachings of the disclosure without departing from the scope thereof. Therefore, it is intended that the present disclosure not be limited to the particular embodiment(s) disclosed as the best mode contemplated, but that the disclosure will include all embodiments falling within the scope of the appended claims.

## Claims

1. A method for providing a set of operational checks to be implemented prior to configuration changes being made in a mobile network including a user computer connected to a management configuration system and connected to a data center having a storage, which in turn is connected to a Cell Site Router (CSR) for a computer located at a remote cell site, the method comprising the steps of:
the user computer setting operations checks that are transmitted to the management configuration system;
the user computer indicating to the management configuration system that fail-safe mode is initiated;
the management configuration system automatically saving a configuration of at least one program executing on the computer on the data center storage;
the user computer generating commands to modify the configuration of the at least one program;
the management configuration system automatically performing syntax and semantics checks of the generated commands;
if the generated commands pass the check for syntax and semantics, the generated commands are installed on the computer as a new configuration;
the management configuration system automatically performing an operations check of the new configuration to determine if the at least one program is properly configured;
if the operations check determines the at least one program is properly configured, the management configuration system ends the fail-safe mode operation; and
if the operations check determines the at least one program is not properly configured, the management configuration system reverts the configuration to the saved configuration.

2. The method of claim 1, wherein the at least one program comprises a program for the CSR.

3. The method of claim 2, wherein the CSR comprises a virtual CSR (vCSR).

4. The method of claim 3, wherein the operations check comprises a script that causes the vCSR to ping the data center and if a subnet to the data center is denied, the ping fails, and the script reports a failed operations check.

5. The method of claim 1, further comprising the step of: the user computer transmitting a commit command to the management configuration system, which causes the generated commands to be installed as the new configuration.

6. The method of claim 1, wherein the generated commands comprise access control policy configurations.

7. The method of claim 6, wherein the access control policy configurations are selected from the group consisting of: Access Control Lists (ACL), Policy-Based Routing (PBR), IP address configuration, generic router configurations and combinations thereof.

8. The method of claim 1, wherein the operations check comprises a script that verifies for the conditions selected from the group consisting of: reachability to the CSR from the data center, reachability to Remote Radio Units (RRU), process health, CPU utilization and memory health, time synchronization, control plane synchronization, control plane states, interface states, counters and statistics, management plane connectivity, traffic engineering validation, and combinations thereof.

9. The method of claim 8, wherein the operations check for process health includes the operation check script checking:
if a set of processes that are outlined in the script are up and running after a config change, or
if there is a core-dump / crash in the system prior to or after the config change.

10. The method of claim 8, wherein the operations check for time synchronization includes the operation check script verifying if the time synchronization fails or is out-of-sync after a config change.

11. The method of claim 8, wherein the operations check for control plane synchronization includes checking for control plane adjacencies, or specific forwarding table entries, or both.

12. The method of claim 8, wherein the operations check for control plane states includes checking for dynamic control plane protocol states including: Open Shortest Path First (OSPF), Border Gateway Protocol (BGP), Intermediate System-to-Intermediate System (IS-IS).

13. The method of claim 8, wherein the operations check for interface states comprises physical / logical interface operational information.

14. The method of claim 8, wherein the operations check for counters and statistics includes counters related to interface, forwarding information, and Access Control Lists (ACL).

15. The method of claim 8, wherein the operations check for traffic engineering validation includes measuring latency, jitter, queue-length, and throughput for classes of traffic after config change.
